# EUROPEAN PATENT APPLICATION

(11) **EP 2 682 700 A1**
(43) Date of publication of application: **08.01.2014**
(21) Application number: 12425121.6
(22) Date of filing: 03.07.2012
(51) Int. Cl.: F27B 3/18, F27D 3/00, F27D 13/00, F27D 17/00, C21C 5/52

(54) **Steel production plant**

(71) Applicant: Steb S.r.l., 25030 Corzano (BS) (IT)
(72) Inventor: Ferlinghetti, Giovanni, 25030 Corzano Brescia (IT)
(74) Representative: Pulieri, Gianluca Antonio

(57) **Abstract**

A pre-heating device (4) of a melting plant (1) for feeding heated scrap or raw materials to a melting furnace (2) envisages a pre-heating chamber (30) closed at the top and permits the lateral feeding of the melting furnace. The device (4) further comprises a loading group (40) and a thrust group (70).

## Description

The present invention relates to a melting plant for the production of molten metal, in particular steel, starting from scrap. In particular, the present invention relates to a plant comprising a melting furnace and a pre-heating device for the supply of pre-heated scrap to the melting furnace.

In the plants known today, when the pre-heated scrap needs to be fed into the melting furnace, the lid which covers the top of the furnace must be moved and the pre-heated scrap is loaded in the melting furnace from above.

The considerable drawback is therefore encountered in such plants of the fumes present inside the melting furnace coming out when the lid is moved, and of considerable heat dispersion caused by the exit of the fumes and the movement of the pre-heated scrap.

The purpose of the present invention is to make a pre-heating device for a plant producing molten metal, and in particular steel, starting from scrap, which overcomes the drawbacks spoken of in relation to the prior art.

The characteristics and advantages of the melting plant according to the present invention will be evident from the description given below, by way of a nonlimiting example according to the appended drawings, wherein:

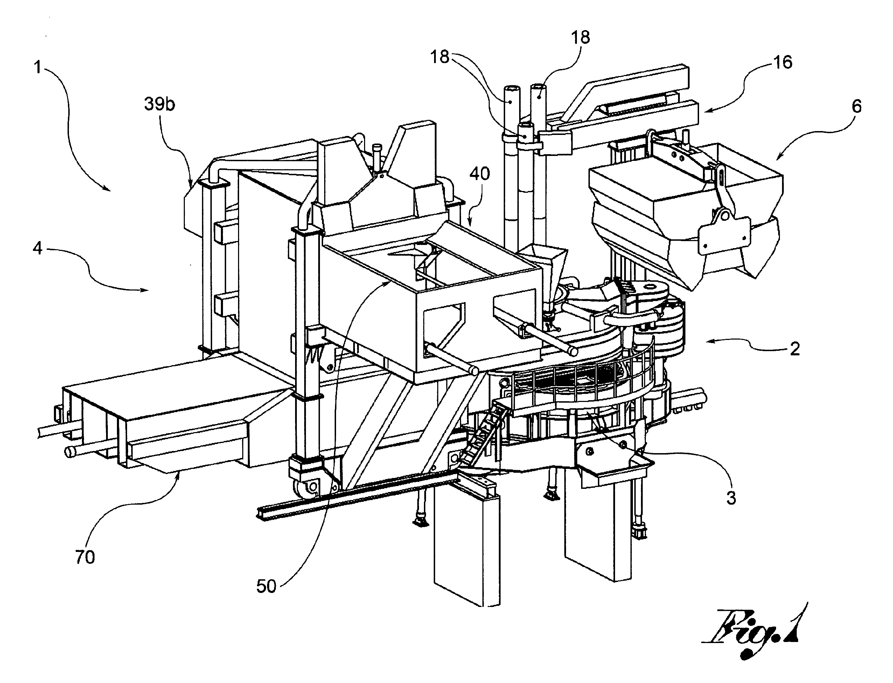

- fig.1 shows a melting plant according to one example of embodiment of the present invention, comprising a melting furnace, a pre-heating device and loading means for loading the scrap in the pre-heating device, in a rest configuration;

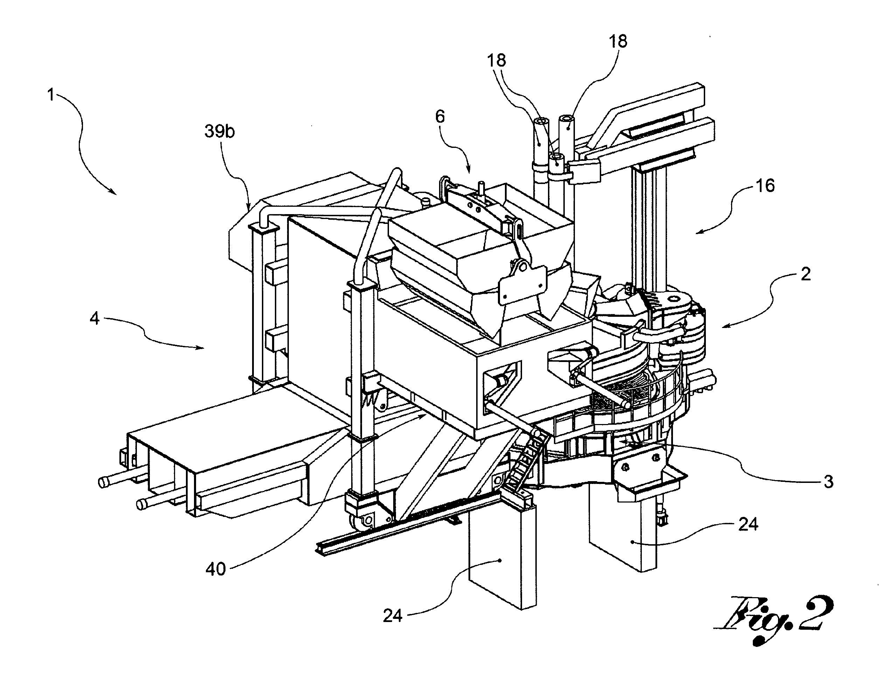

- fig.2 shows the plant in fig.1 in a loading configuration of the scrap in the pre-heating device;

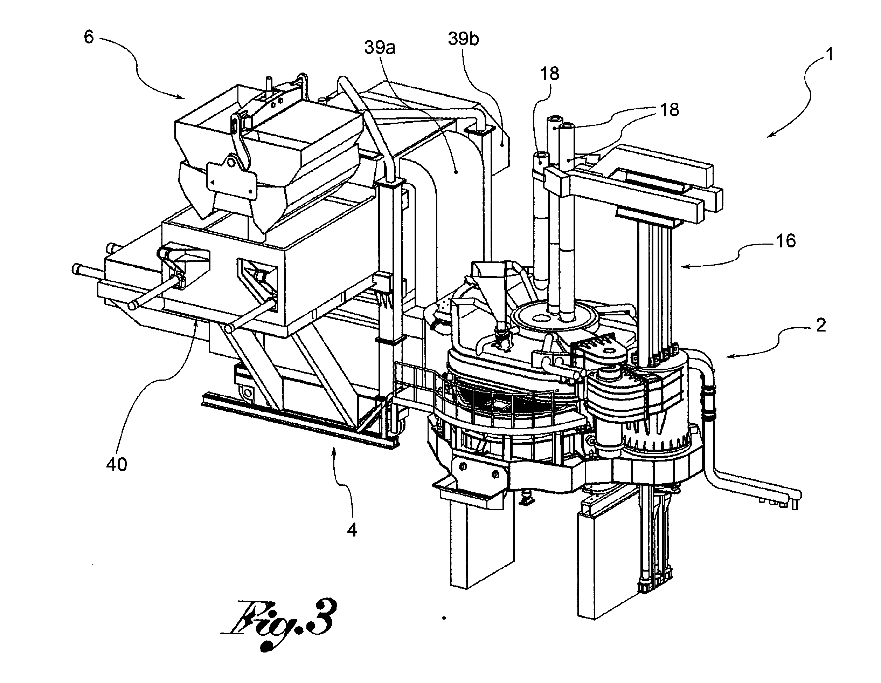

- fig.3 shows the plant in fig.2 from a different point of observation;

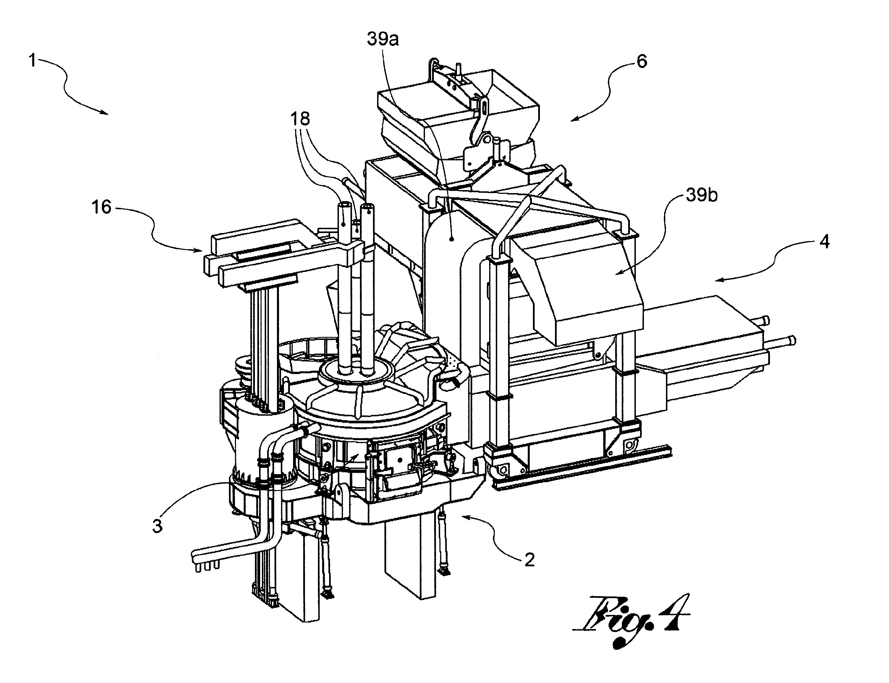

- fig.4 shows the plant in fig.2 from yet a different point of observation;

- fig.5 shows the pre-heating device in partial cross-section, with a loading group in an initial configuration;

- fig.6 6 shows a cross-section of the loading group in fig.5;

- fig.7 shows the pre-heating device in partial cross-section, with the loading group in an intermediate configuration;

- fig.8 shows a cross-section of the pre-heating device, with the loading group in a final configuration;

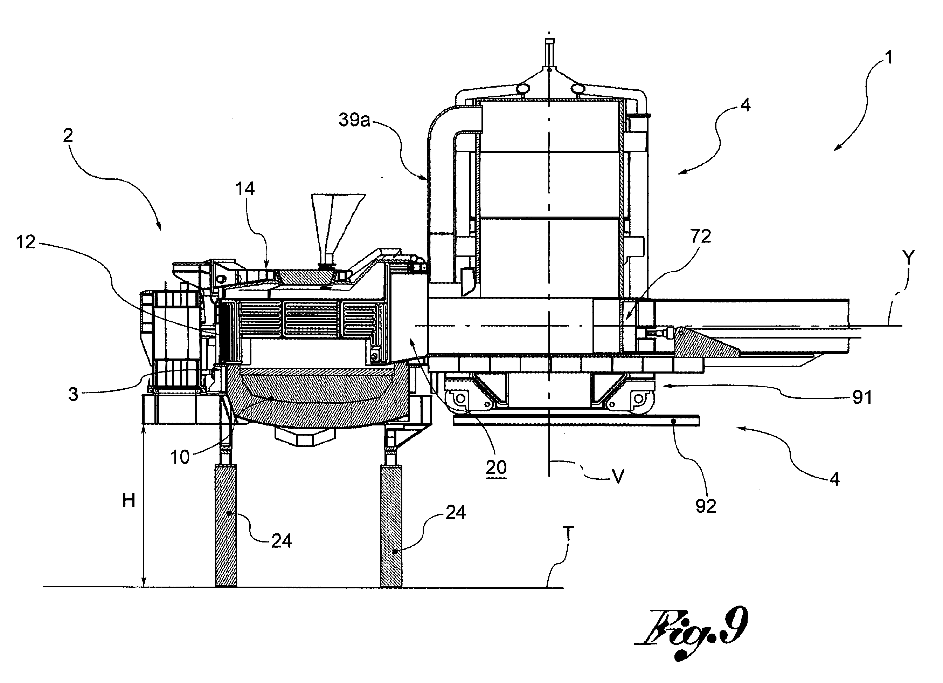

- fig.9 shows a cross-section of the melting plant, with a thrust group of the pre-heating device in an initial configuration;

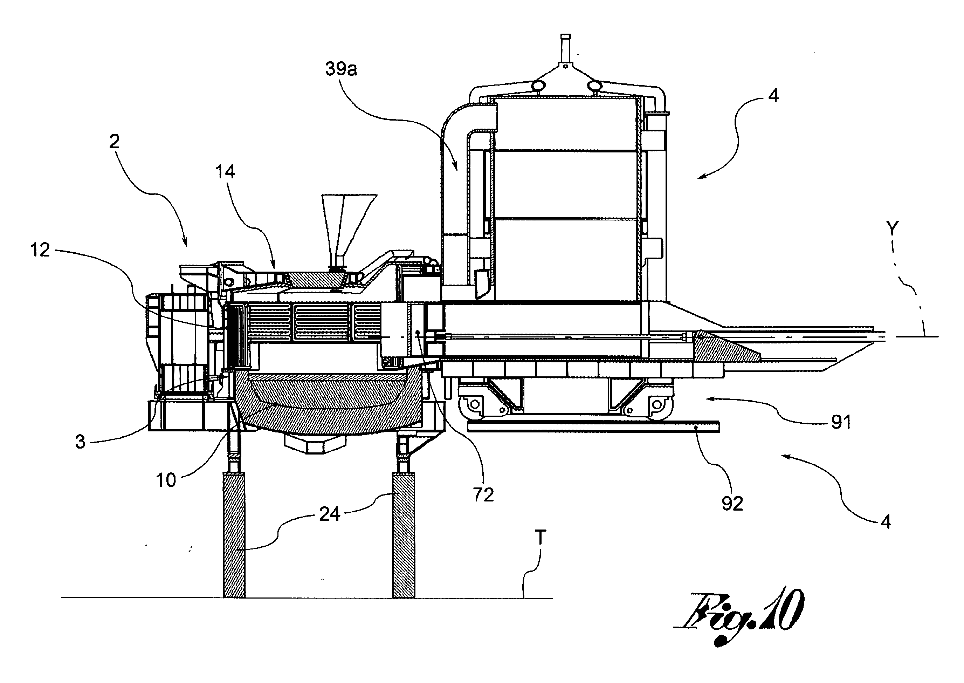

- fig.10 shows a cross-section of the melting plant, with the thrust group in a final configuration;

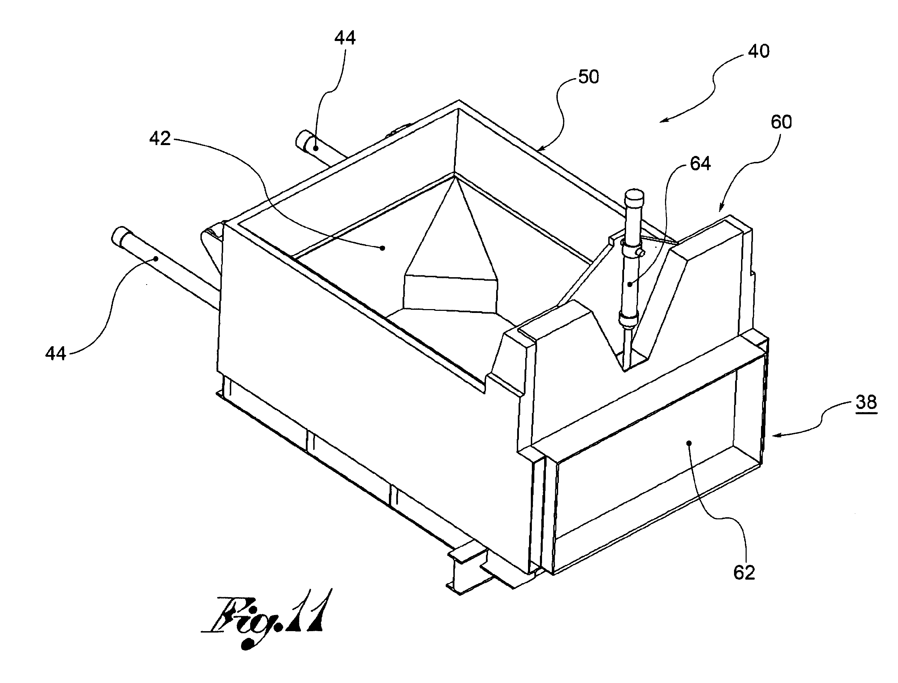

- fig.11 shows the loading group, provided with means of closure in a closed configuration;

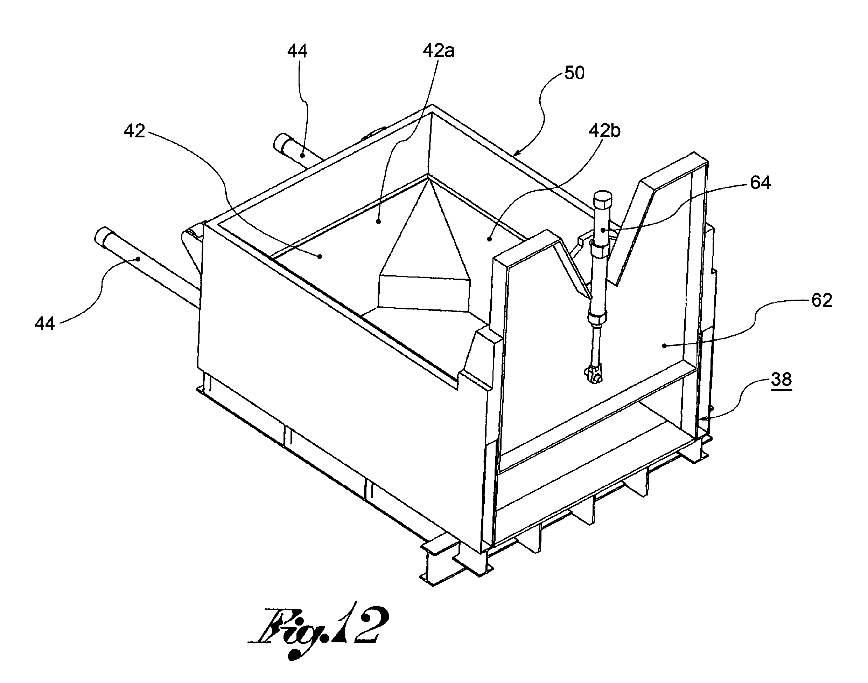

- fig.12 shows the loading group with the means of closure in an open configuration;

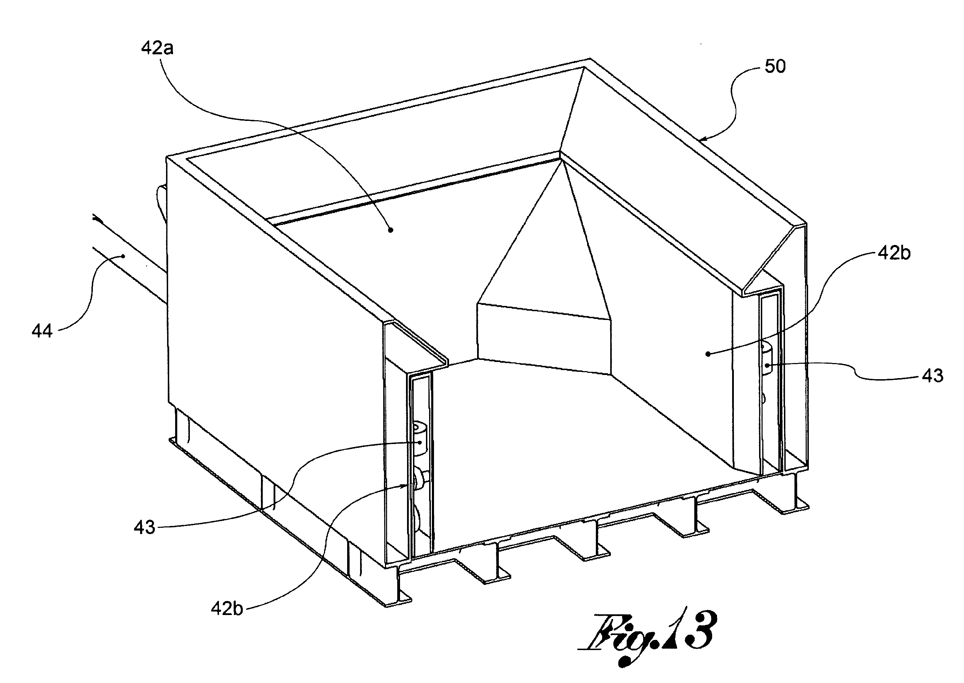

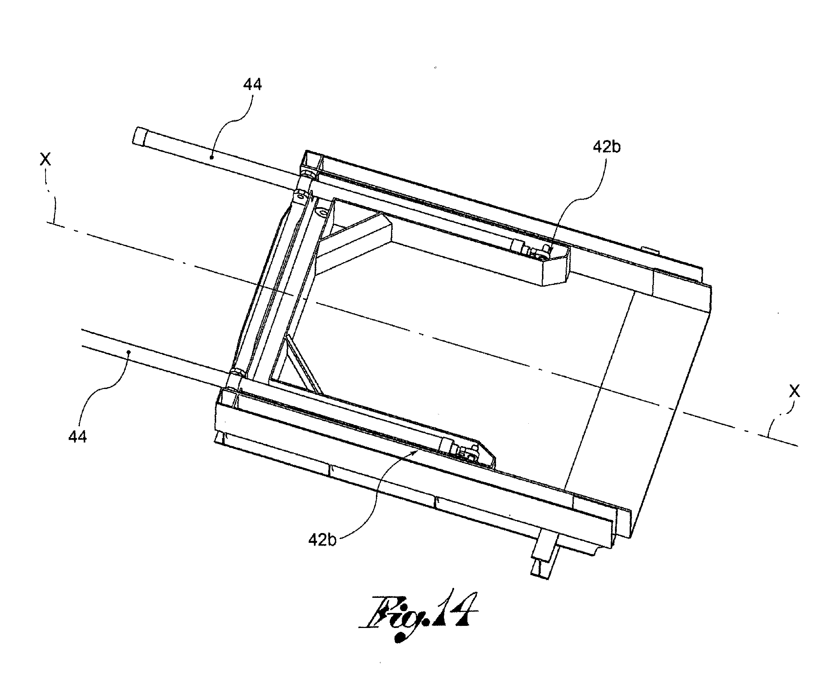

- figures 13 and 14 show construction details of the loading group;

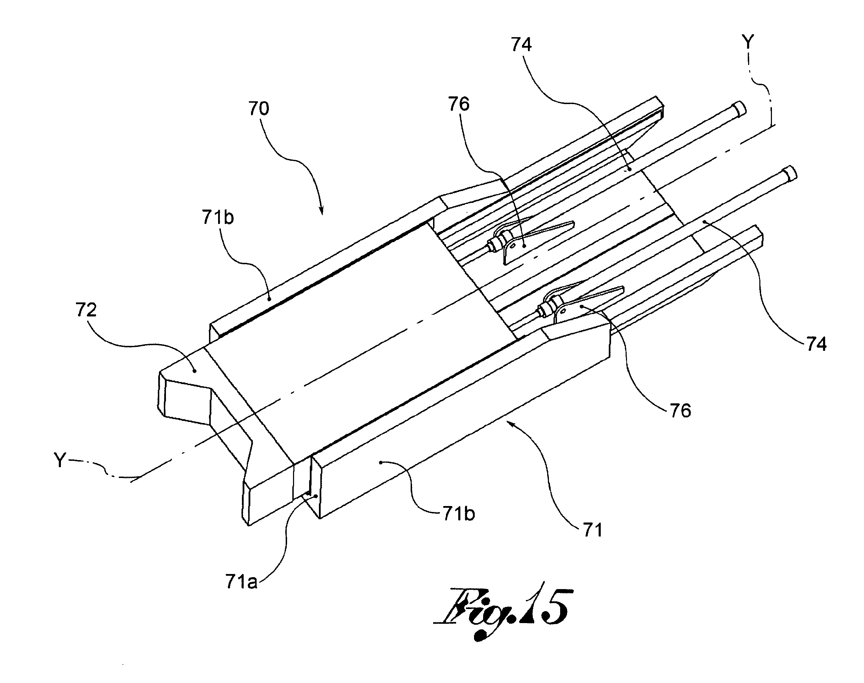

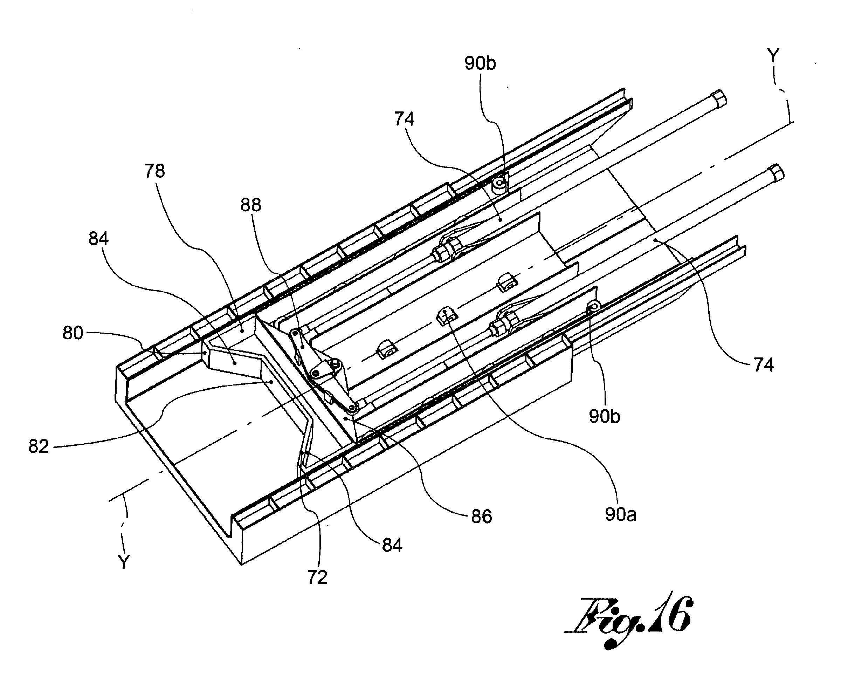

- figures 15 and 16 show construction details of the thrust group; and

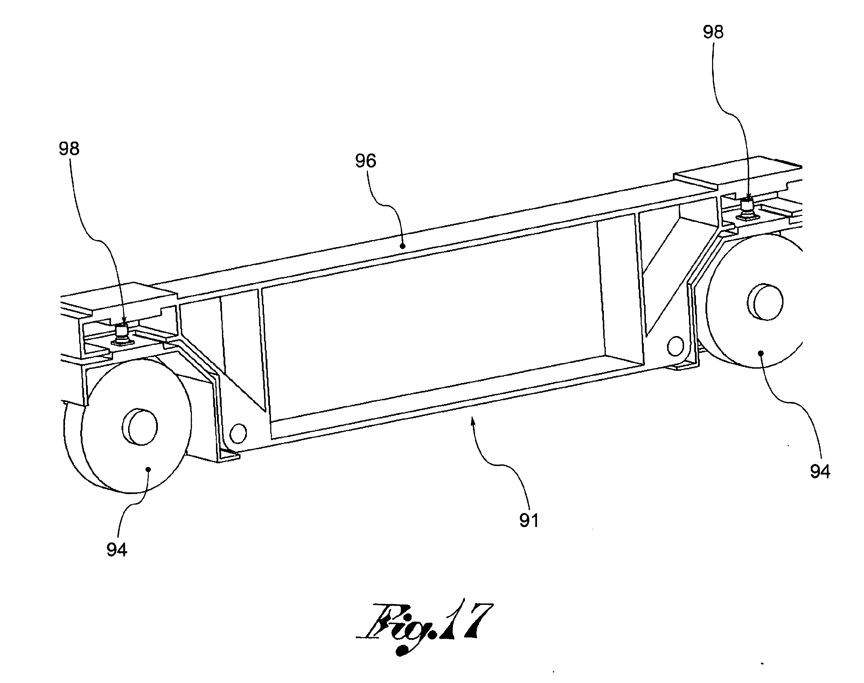

- fig.17 shows a support unit of the pre-heating device.

With reference to the appended drawings, reference numeral 1 globally denotes a melting plant for the production of molten metal, in particular steel, starting from scrap. In particular, the plant 1 comprises a melting furnace 2 and a pre-heating device 4 engaged with the melting furnace to feed said melting furnace with pre-heated scrap. Furthermore, the plant 1 comprises loading means 6 suitable for loading scrap (or raw materials) to be heated in said pre-heating device 4.

The melting furnace 2 comprises a basin 3 suitable for containing molten metal. Said basin comprises a bottom 10, generally made with a coating in refractory material, and a side wall 12 projecting from the bottom 10. Preferably, the melting furnace 2 comprises cooling means suitable for cooling the wall of the container. In addition, the furnace 2 comprises a cooled lid 14 suitable for closing the basin at the top 3.

Furthermore, the melting furnace 2 comprises electric melting means 16. Said melting means comprises for example electrodes 18, held by electrode bearing arms, suitable for heating the scrap contained in the basin 3 by an electric arc, to obtain the molten metal. Preferably, the lid 14 of the melting furnace is suitable for being traversed by said electrodes 18.

In addition, the side wall 12 of the melting furnace has a feed aperture 20 for operative connection to the pre-heating device 4.

According to a preferred embodiment, having defined a ground surface T, the basin 3 of the melting furnace is positioned at a height H in relation to said ground surface T and is supported at said height by pillars 24. The compartment between the ground surface T and the basin of the melting furnace 2 is suitable for housing a ladle for collecting the molten metal.

The pre-heating device 4 comprises a pre-heating chamber 30, closed at the bottom and the top, extending along a preferably vertical axis V.

The pre-heating chamber 30 comprises a bottom 32 and an annular side wall 34, which extends along said vertical axis V and is connected to the bottom 32, projecting from it.

The chamber 30 is provided with an exit aperture 36, made in said lateral wall 34, suitable for placing the inner compartment of the chamber 30 in communication with the feed aperture 20 of the melting furnace.

In addition, the chamber 30 is fitted with a lower aperture 37, made in the side wall 34, on the side opposite the exit aperture 36, for the introduction of a carriage which permits pushing of the pre-heated scrap towards the melting furnace, and an upper aperture 38, made in the side wall 34, for the introduction inside the chamber 30 of the scrap to be pre-heated.

In addition, the pre-heating device 4 comprises a by-pass duct 39a which connects the area of the chamber 30 next to the exit aperture 36 or feed aperture 20 to the area of the chamber 30 at the top of said chamber 30, for example above the upper aperture 38.

In addition, the pre-heating device 4 comprises a fume extraction duct 39b which connects the area of the chamber 30 at the top of said chamber 30, for example above the upper aperture 38, to suction and fume treatment systems.

According to a further embodiment, the by-pass duct 39a connects the area of the chamber 30 next to the exit aperture 36 or feed aperture 20 directly to said fume extraction pipe 39b.

Preferably, in addition, the pre-heating device 4 comprises splitting means suitable for splitting the flow of fumes which traverse the feed aperture 20, preferably splitting the fumes towards the by-pass duct 39a.

In addition, the pre-heating device 4 comprises a loading group 40 suitable for emptying the scrap inside the chamber 30, through said upper aperture 38.

Said loading group 40 comprises a loading pusher 42 movable by pistons 44, for example hydraulically operated, and translatable along a loading axis X, for example horizontal, incident to the vertical axis V.

Preferably, in addition, the loading group 40 comprises a compartment 50 open at the top and fitted with a bottom, inside which said loading pusher 42 is alternatively translatable back and forth to push the loaded scrap into the compartment 50 inside the chamber 30 and to return to the initial position to load further scrap.

Preferably, the pusher 42 comprises a thrust wall 42a, preferably perpendicular to the loading axis X, and lateral arms 42b which extend, starting from the ends of the thrust wall 42a, along said loading axis X, forming a "C" shaped structure which collects the scrap present in the compartment 50 and pushes it towards the upper aperture 38 of the chamber 30.

Preferably, said arms 42b have a predefined length along said loading axis X and said pistons 44 are connected to the pusher 42, and in particular hinged thereto, at the forward ends of said arms 42b.

Preferably, in addition, roller means 43 are provided between the side walls of the compartment 50 and the arms 42b of the pusher 42, such as wheels with bearings, to facilitate the translation of the pusher inside the compartment 50.

In addition, preferably, the loading group 40 comprises a closure group 60, positioned at the upper aperture 38 to permit or prevent access thereto.

For example, said closure group comprises a partition 62 and drive means 64 of said partition, such as hydraulic drive means comprising a piston.

Furthermore, the pre-heating device 4 comprises a thrust group 70, operating under the loading group 40 and suitable for pushing the pre-heated scrap from the chamber 30 to the melting furnace through the lower aperture 37 of the chamber 30 and the feed aperture 20 of the basin 3 of the melting furnace 2.

Preferably, the thrust group 70 comprises a thrust pusher 72 translatable inside the chamber 30 along a thrust axis Y, for example horizontal, incident to the vertical axis V.

Preferably, the thrust axis Y and the loading axis X are angularly distanced, for example placed on planes orthogonal to each other, that is angularly distanced by 90°; according to further embodiment variations, the thrust axis Y and the loading axis X lie on the same plane, also passing through the vertical axis V.

Preferably, said thrust group comprises a housing 71, comprising a bottom 71a and lateral sides 71b projecting from the bottom 71a, between which the pusher 72 is translatable.

Preferably, the thrust group 70 comprises a pair of pistons 74 connected to the pusher 72 to impose a forward or rearward translation. Said pistons 74 are preferably hinged at a fixed rear end, for example at the hinging pints 76 with the bottom 71a of the housing 71, to absorb any oscillations or misalignments of the pusher 72.

Preferably, the pusher 72 comprises a front body 78 defined by an annular and internally hollow wall, having a front wall 80 comprising a central section 82 substantially perpendicular to the thrust axis Y and side sections 84 projecting at the ends of the front wall 80 and inclined in the direction of advancement of the pusher 72.

In addition, the pusher 72 comprises a rear plate 86, to which the front body 78 is connected, and a connecting rod 88, supported and hinged to the rear plate 86; said pistons 74 are hinged to said connecting rod, on both sides of the hinging point of the connecting rod to the rear plate, to absorb translation irregularities of the pusher 72.

Preferably, moreover, said thrust group 70 comprises roller means, such as wheels with bearings, in particular central wheels 90a and lateral wheels 90b, suitable for facilitating the translation of the pusher 72, respectively positioned between said pusher 72 and the bottom 71a of the housing 71 or between said pusher 72 and the sides 71b of the housing 71.

According to a preferred embodiment, the pre-heating device 4 comprises a support unit 91 suitable for facilitating the movement of the chamber 30 in a direction towards the melting furnace, for example on rails 92.

Preferably, said support unit comprises wheels 94, a support frame 96 and weighing cells 98 suitable for detecting the weight of the scrap contained in the pre-heating chamber and, by the difference, that emptied into the furnace.

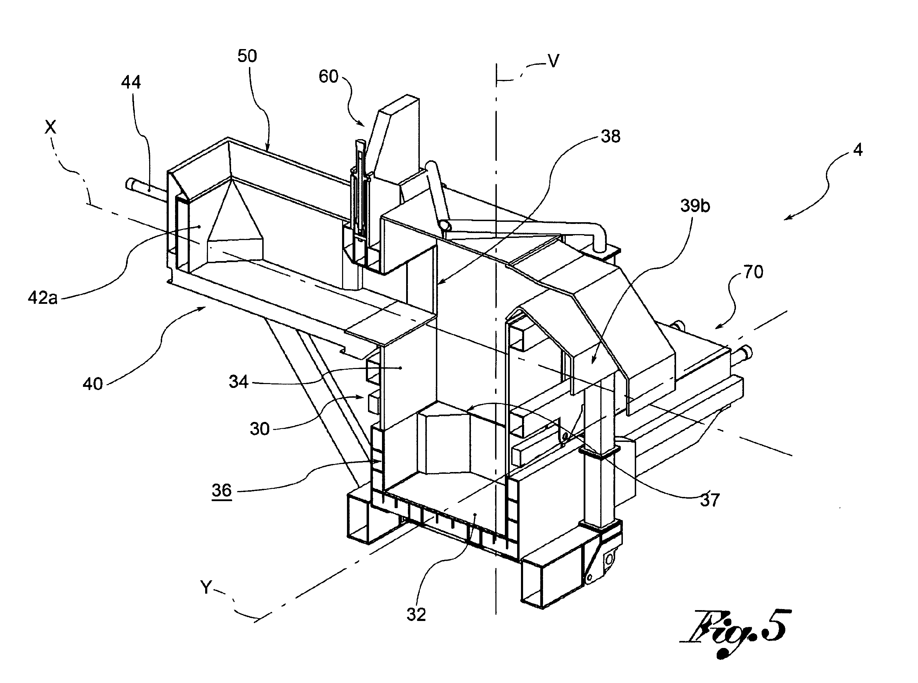

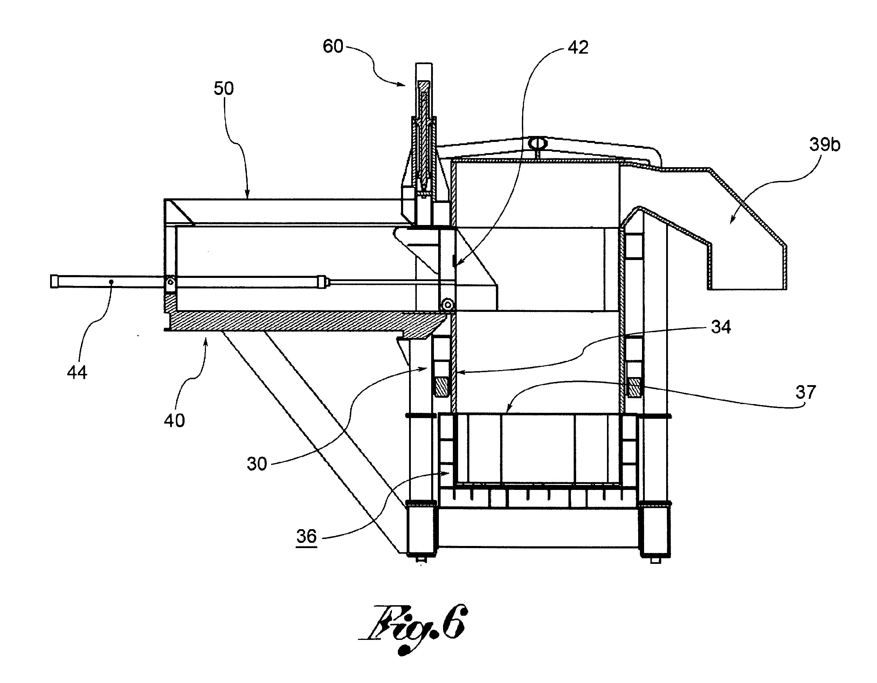

In normal functioning of the melting plant according to the invention, the loading means 6 pick up the scrap (or raw material), for example from a scrap deposit area, and load it in the compartment 50 of the loading group 40; in said initial configuration, the pusher 42 of the loading group 40 is in a rearward limit position, so as to leave the loading compartment 50 free for loading (figures 5 and 6).

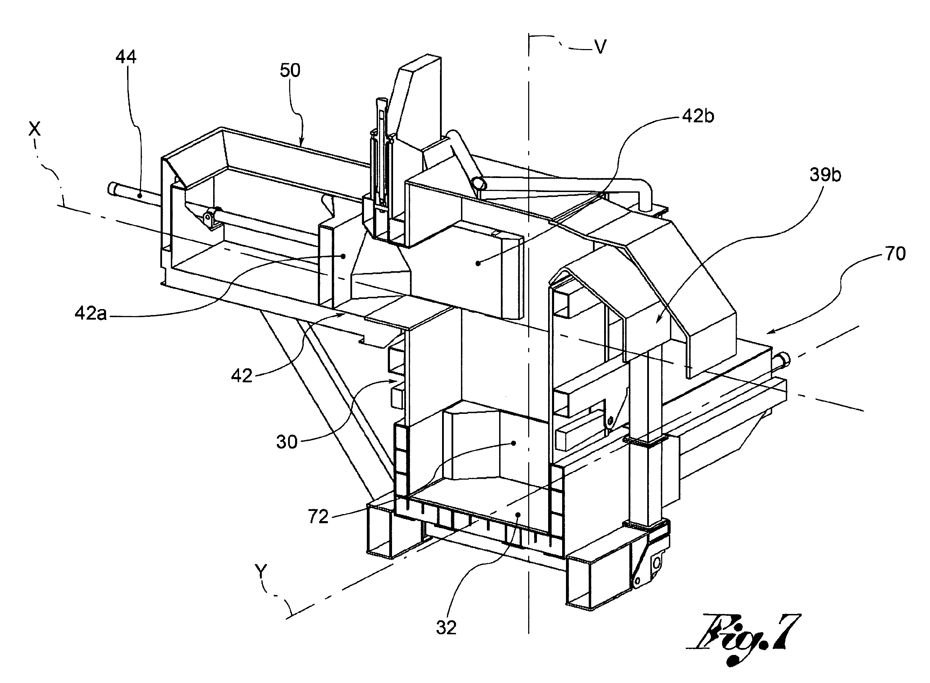

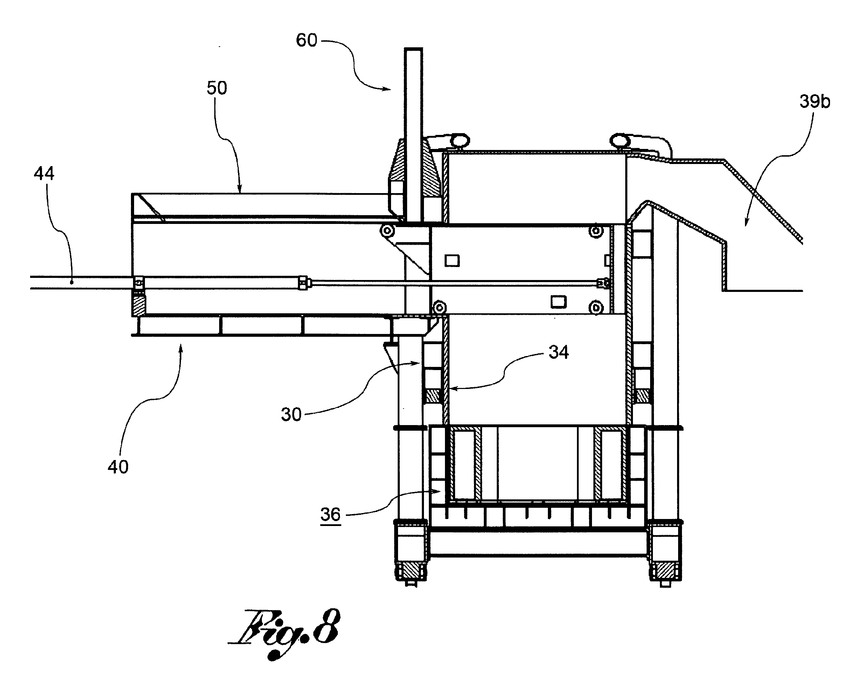

Subsequently, having placed the closure group 60 in the open configuration which permits access to the chamber 30, the pusher 42 is controlled in translation so as to advance (figures 7 and 8), so that the scrap loaded in the compartment 50 is pushed inside the pre-heating chamber 30 through the upper aperture 38.

After introducing the scrap into the chamber 30, and if necessary repeating such operation until said chamber is full, the closure group is commanded and placed in the closed configuration.

In an intermediate configuration, said scrap lies in the chamber 30 and the thrust group 70 is in an initial configuration, wherein the thrust pusher 72 is in a limit rearward position, for example closing the lower aperture 37 of the chamber 30.

After having adequately heated the scrap contained in the container 30 the thrust group 70 is actuated so that the pusher 72 is translated along the thrust axis Y so as to push the pre-heated scrap inside the melting furnace through the exit aperture 36 of the chamber 30 and the feed aperture 20 of the melting furnace.

The melting furnace is thereby loaded without raising the lid 14, in that loading takes place through the feed aperture 20 made in the side wall 12 of the melting furnace.

The fumes generated inside the melting furnace pass towards the pre-heating device through the feed aperture 20.

The splitting means are suitable for splitting the flow of fumes from the melting furnace towards the bottom of the chamber 30, through the exit aperture 36, or towards the by-pass duct 39a.

If the scrap needs to be heated by the fumes, then said fumes pass through the exit aperture 36, rise into the chamber 30 and heat the scrap contained therein and, rising into the upper part of the chamber, enter the fume extraction duct 39 and are then taken away and treated further.

For treatment requirements or during loading in the melting furnace of the pre-heated scrap, the splitting means deal with channelling the fumes towards the by-pass duct 39a, so as to directly reach the top of the chamber 30 which they come out of through the fume extraction duct 39b.

The pre-heating device also remains closed at the top during production in that the introduction of scrap to be heated takes place laterally to the pre-heating chamber.

Innovatively, the melting plant according to the present invention overcomes the drawbacks spoken of in relation to the prior art, and in particular makes it possible not to disperse into the environment the fumes caused by the melting of the metal, either during loading of the scrap to be heated into the pre-heating device or during loading into the melting furnace of the heated scrap.

A person skilled in the art may make modifications to the melting plant described above so as to satisfy contingent requirements while remaining within the sphere of protection of the following claims.

## Claims

1. Pre-heating device (4) of a melting plant (1) for feeding heated scrap or raw materials to a melting furnace (2) of said plant (1), comprising:
- a pre-heating chamber (30), extending along a vertical axis( V) and closed at the top, having a bottom (32) and an annular side wall (34), wherein said side wall (34) has an exit aperture on the bottom (36) for feeding the pre-heated scrap to the melting furnace, a lower aperture (37) aligned with the exit aperture (36) and an upper aperture (38) for the introduction of scrap to be heated into the chamber (30);
- a loading group (40) comprising a loading compartment (50) and a loading pusher (42) translatable in said loading compartment (50) along a loading axis (X) to push the scrap into the chamber (30) through the upper aperture (38);
- a thrust group (70) comprising a housing (71) and a thrust pusher (72) translatable in said housing (71) along a thrust axis (Y) to push the pre-heated scrap towards the feed aperture (20) of the melting furnace (2) through the exit aperture (36).

2. Pre-heating device according to claim 1, wherein the thrust axis (Y) and the loading axis (X) are angularly distanced, for example placed on planes orthogonal to each other that is, angularly distanced by 90°.

3. Pre-heating device according to claim 1, wherein the thrust axis (Y) and the loading axis (X) lie on the same plane, also passing through the vertical axis (V) of the chamber (30).

4. Pre-heating device according to any of the previous claims, comprising
- a fume extraction duct (39b) which connects the area of the chamber (30) at the top of said chamber (30), for example above the upper aperture (38), to suction and fume treatment systems;
- a by-pass duct (39a) which connects the area of the chamber (30) next to the exit aperture (36), to the fume extraction duct (39b);
- splitting means suitable for splitting the flow of fumes between the exit aperture (36) of the chamber (30) and the by-pass duct (39a) in a controlled manner.

5. Pre-heating device according to any of the previous claims, wherein the loading group (40) comprises pistons (44) for the movement of the loading pusher (42).

6. Pre-heating device according to any of the previous claims, wherein the pusher (42) comprises a thrust wall (42a), perpendicular to the loading axis (X), and lateral arms (42b) which extend, starting from the ends of the thrust wall (42a), along said loading axis (X), forming a "C" shaped structure.

7. Pre-heating device according to claims 5 and 6, wherein the pistons (44) are hinged to the pusher (42), at the forward ends of said arms (42b).

8. Pre-heating device according to any of the previous claims, wherein the loading group (40) comprises a closure group (60), positioned at the upper aperture (38) to permit or prevent access thereto.

9. Pre-heating device according to any of the previous claims, wherein the thrust group (70) comprises thrust pistons (74) connected to the pusher (72).

10. Pre-heating device according to claim 9, wherein the pusher (72) comprises a front body (78) and a connecting rod (88), hinged to the front body (78), wherein the pistons (74) are hinged to said connecting rod, on both sides of the hinging point of the connecting rod to the front body (78).

11. Pre-heating device according to any of the previous claims, comprising a support unit (90) with wheels (94) which supports the chamber (30), the thrust group (70) and the loading group (40), and is suitable for permitting the movement of the chamber (30) in a direction towards the melting furnace.

12. Melting plant (1) comprising:
- a melting furnace (2) comprising a basin (3) suitable for containing liquid metal, comprising a side wall (12) and a lid (14) which closes the top of the basin (3), wherein the side wall (12) is provided with a feed aperture (20);
- a pre-heating device (2) according to any of the previous claims, wherein the chamber (30) is in communication with the inside of the basin (3) through the feed aperture (20).
